# EUROPÄISCHE PATENTSCHRIFT

(11) **EP 2 671 439 B1**
(45) Veröffentlichungstag und Bekanntmachung des Hinweises auf die Patenterteilung: **20.04.2016**
(21) Anmeldenummer: 13002898.8
(22) Anmeldetag: 05.06.2013
(51) Int. Cl.: A01B 49/02, A01B 63/111, A01B 63/112

(54) **Landwirtschaftliche Bodenbearbeitungsmaschine**
Agricultural soil cultivation machine
Machine agricole de traitement du sol

(30) Priorität: 08.06.2012 DE 102012011542
(43) Veröffentlichungstag der Anmeldung: 11.12.2013
(73) Patentinhaber: Alois Pöttinger Maschinenfabrik Ges.m.b.H., 4710 Grieskirchen (AT)
(72) Erfinder: Hehenberger, Robert, 4731 Prambachkirchen (AT); Hofer, Josef, 4084 St. Agatha (AT); Meindlhumer, Wilhelm, 4713 Gallspach (AT)
(74) Vertreter: Thoma, Michael

(56) Entgegenhaltungen:
- EP-A1- 0 010 076
- WO-A1-2012/125109
- FR-A1- 2 756 699
- FR-A1- 2 851 121
- US-A1- 2008 066 935

## Beschreibung

Die vorliegende Erfindung betrifft eine landwirtschaftliche Bodenbearbeitungsmaschine, mit zumindest einer Hauptbodenbearbeitungseinheit, die an einem Maschinenrahmen aufgehängt ist, sowie einer Nachbearbeitungseinheit, die in Fahrtrichtung hinter der Hauptbodenbearbeitungseinheit angeordnet und an einer Nachbearbeitungsträgereinheit aufgehängt ist, die am Maschinenrahmen höhenbeweglich gelagert ist.

Eine solche Bodenbearbeitungsmaschine ist beispielsweise aus der DE 20 2005 001 411 bekannt, die eine Scheibenegge zeigt, bei der als Hauptbodenbearbeitungseinheit zwei quer zur Fahrtrichtung ausgerichtete, hintereinander angeordnete Scheibenreihen vorgesehen sind, die an einem Maschinenrahmen aufgehängt sind, welcher über eine an sich bekannte Dreipunktanlenkung am Schlepper anbaubar ist. Den Scheibenreihen nachgeordnet ist eine Nachläufereinheit in Form einer Bodenwalze, die an einer Nachbearbeitungsträgereinheit aufgehängt ist, die um eine liegende Querachse schwenkbar und damit höhenverstellbar am Maschinenrahmen gelagert ist. Hierdurch kann je nach gewünschter Bearbeitungstiefe die passende Höheneinstellung der Nachläufereinheit gewählt werden, wobei die gewählte Höheneinstellung beispielsweise durch Abstecken eines Bolzens in einem Lochbild fixiert werden kann.

Derartige Bodenbearbeitungsmaschinen neigen unter bestimmten Bodenverhältnissen und Fahrgeschwindigkeiten manchmal zu einem Aufschaukeln bzw. zu Vibrationen, was bisweilen zu einem zyklischen Auf- und Abspringen der Maschine führen kann. Ein solches Aufschaukeln der Maschine bzw. entsprechende Schwingungen führen einerseits natürlich zu einer übermäßigen Beanspruchung der Bauteile der Maschine, beeinträchtigen andererseits aber auch das gewünschte Arbeitsergebnis der Bodenbearbeitung. Die Ursachen für derartige Vibrationen bzw. ein solches Aufschaukeln können vielfältig sein, wobei als eine Ursache hierfür angesehen wird, dass bei zweireihigen bzw. mehrreihigen Bearbeitungseinheiten eine nachlaufende Einheit bei bestimmten Bodenverhältnissen und Fahrgeschwindigkeiten auf einen von einer vorauslaufenden Einheit aufgeworfenen Auswurf-Erdwall auffährt, wodurch zyklische Höhenschwingungen entstehen können. Es wurde insofern bereits angedacht, die hintereinander herlaufenden Einheiten zueinander verstellbar auszubilden, beispielsweise die hintereinander angeordneten Scheibenreihen quer zur Fahrtrichtung zueinander verstellbar auszubilden, wie dies die EP 11 82 920 zeigt.

Andere Ansätze sehen vor, ein an solchen Bodenbearbeitungsmaschinen bisweilen vorgesehenes Transportfahrwerk, welches für den Straßentransport hinter der Nachbearbeitungseinheit auf den Boden geschwenkt werden kann, im Arbeitsbetrieb nach vorne über die Nachbearbeitungseinheit oder sogar die Hauptbearbeitungseinheit zu verschwenken, um den Schwerpunkt der Maschine nach vorne zu verlagern und deren Massenträgheitsmoment bezüglich Nickbewegungen zu verändern, um das Fahrverhalten zu verbessern, wie dies beispielsweise die Schrift EP 22 32 974 zeigt. Ein solches Nach-vorne-Schwenken des Transportfahrwerks ist jedoch bisweilen nicht ausreichend und im Falle von Bodenbearbeitungsmaschinen, welche kein solches Transportfahrwerk aufweisen, schlichtweg nicht möglich.

Ferner ist aus der Schrift US 2008/0066935 ein Bodenbearbeitungsgerät bekannt, bei dem heckseitig am Maschinenrahmen eine Stabwalze angebracht ist, die mittels schwenkbarer Lenker gegenüber dem Maschinenrahmen höhenbeweglich ist, wobei die Lenker mit Federn beaufschlagt sind, um einen ausreichenden Bodenanpressdruck der Stabwalze zu erzielen. Mittels Hydrauligzylindern kann die Stabwalze entgegen der Federspannung ausgehoben werden, wobei die Hydrauligzylinder an den Lenkern in Langlöchern geführt sind, sodass bei der Bodenbearbeitung die Lenker unter dem Federdruck ohne Beeinflussung durch die Hydrauligzylinder auf und ab schwenken können.

Aus der FR 27 56 699 ist ein weiteres Bodenbearbeitungsgerät bekannt, bei dem heckseitig eine Stabwalze vorgesehen ist, die zum Hauptmaschinenrahmen höhenbeweglich ist und durch ein Federbein auf den Boden gedrückt wird. Die Federkraft des Federbeins ist dabei verstellbar.

Ferner beschreibt die Schrift EP 00 10 07 6 A1 ein Bodenbearbeitungsgerät, bei dem heckseitig ebenfalls eine höhenbewegliche Walze vorgesehen ist, deren Bodendruck mittels einer gebogenen Blattfeder beeinflusst ist.

Der vorliegenden Erfindung liegt daher die Aufgabe zugrunde, eine verbesserte Bodenbearbeitungsmaschine der eingangs genannten Art zu schaffen, welche Nachteile des Standes der Technik vermeidet und Letzteren in vorteilhafter Weise weiterbildet. Insbesondere soll das Schwingungsverhalten der Maschine im Arbeitsbetrieb für verschiedene Bodenverhältnisse und Fahrgeschwindigkeiten verbessert werden, ohne hierfür auf ein Transportfahrwerk angewiesen zu sein.

Erfindungsgemäß wird die genannte Aufgabe durch eine Bodenbearbeitungsmaschine gemäß Anspruch 1 gelöst. Bevorzugte Ausgestaltungen der Erfindung sind Gegenstand der abhängigen Ansprüche.

Es wird also vorgeschlagen, die Nachbearbeitungseinheit im Arbeitsbetrieb zur Hauptbearbeitungseinheit bzw. zum Maschinenrahmen beweglich zu halten und zwischen dem Maschinenrahmen und der Nachbearbeitungseinheit auftretende Verstellbewegungen zu dämpfen, wodurch ein Aufschaukeln der Maschine wirkungsvoll verhindert bzw. reduziert werden kann. Die Nachbearbeitungseinheit ist im Arbeitsbetrieb nicht mehr starr an den Maschinenrahmen gekoppelt, sondern kann Höhenverstellbewegungen ausführen, so dass bezüglich der Höhenveränderbarkeit von Nachbearbeitungseinheit zur Hauptbearbeitungseinheit eine Selbsteinstellung erfolgt. Erfindungsgemäß ist die Nachbearbeitungseinheit im Arbeitsbetrieb zum Maschinenrahmen höhenbeweglich gehalten, wobei zwischen dem Maschinenrahmen und der Nachbearbeitungseinheit ein Bewegungsdämpfer zur Dämpfung der Höhenbewegungen der Nachbearbeitungseinheit relativ zum Maschinenrahmen vorgesehen ist. Durch die vorzugsweise begrenzte Freigängigkeit der Nachbearbeitungseinheit relativ zur Hauptbearbeitungseinheit bzw. zum Maschinenrahmen kann die Nachbearbeitungseinheit Bodenwellen folgen und selbsttätig Ausgleichsbewegungen zum Maschinenrahmen ausführen, wodurch die Neigung zum Aufschaukeln und zu Vibrationen deutlich reduziert werden kann.

Zusätzlich zu einem solchen Bewegungsdämpfer wird die Beweglichkeit der Nachbearbeitungseinheit gegenüber der Hauptbodenbearbeitungseinheit mit einer Federkraft beaufschlagt, um die Nachbearbeitungseinheit in eine Sollstellung relativ zur Hauptbodenbearbeitungseinheit vorzuspannen bzw. zu einer solchen Sollstellung hin zu treiben. Dabei ist zwischen dem Maschinenrahmen und der Nachbearbeitungsträgereinheit eine Federeinrichtung vorgesehen derart, dass die Nachbearbeitungseinheit unter Federbeaufschlagung im Arbeitsbetrieb relativ zum Maschinenrahmen höhenbeweglich ist. Die genannte Federeinrichtung kann hierbei insbesondere dazu bestimmt sein, die Nachbearbeitungseinheit relativ zum Maschinenrahmen nach unten zu drücken, so dass zumindest ein Teil des Maschinengewichts auf der Nachbearbeitungseinheit ruht und/oder die Tiefeneinstellung für die Hauptbodenbearbeitungseinheit entsprechend gesteuert wird.

Grundsätzlich können die genannte Federeinrichtung und der zuvor erwähnte Bewegungsdämpfer separate Baugruppen bilden, welche jeweils, ggf. an verschiedenen Anbaupunkten und/oder Einbaupositionen zwischen dem Maschinenrahmen und der Nachläuferträgereinheit vorgesehen sein können. In vorteilhafter Weiterbildung der Erfindung können die Federeinrichtung und der Bewegungsdämpfer aber auch in einer gemeinsamen Baugruppe integriert sein, vorzugsweise in Form einer Feder-/Dämpfereinheit ausgebildet sein.

In Weiterbildung der Erfindung ist die Freigängigkeit der Nachbearbeitungseinheit durch Anschläge begrenzt, so dass relativ zum Maschinenrahmen nur eine begrenzte Höhenbeweglichkeit gegeben ist, wobei die Anschläge verstellbar ausgebildet sein können, um den Freigängigkeitskorridor an verschiedene Betriebsbedingungen anpassen zu können.

Um das Ansprechverhalten der Freigängigkeit bzw. Beweglichkeit der Nachläufereinheit im Arbeitsbetrieb besser an verschiedene Betriebsparameter und/oder Bodenparameter anpassen zu können, ist der vorgenannte Bewegungsdämpfer verstellbar ausgebildet und besitzt verschiedene Dämpfungscharakteristiken, beispielsweise verschiedene Dämpfungsstufen, insbesondere im Sinne von leicht dämpfend und stark dämpfend und ggf. einer oder mehrerer Zwischenstufen wie mittelstark dämpfend. Hierdurch kann der Grad der Zähigkeit, mit der sich die Nachbearbeitungseinheit gegenüber dem Maschinenrahmen bzw. der Hauptbodenbearbeitungseinheit höhenverstellen lässt, variiert werden, insbesondere um je nach Bodenbeschaffenheit und/oder Arbeitsgeschwindigkeit und/oder Maschineneinstellungen eine optimale Vibrationsreduktion bzw. Verringerung der Aufschaukelneigung zu erzielen.

Die Dämpferverstellung kann hierbei über entsprechende Stellmittel im Arbeitsbetrieb erfolgen, um es dem Maschinenführer zu ermöglichen, während des Arbeitsbetriebs die optimale Dämpfereinstellung zu finden.

In Weiterbildung der Erfindung jedoch ist eine automatisierte Verstellung der Dämpfercharakteristik des Bewegungsdämpfers vorgesehen. Insbesondere kann eine Steuervorrichtung zur variablen Steuerung der Dämpfungscharakteristik des Bewegungsdämpfers in Abhängigkeit zumindest eines Betriebs- und/oder Bodenparameters, insbesondere in Abhängigkeit der Fahrgeschwindigkeit und/oder der Bodenbeschaffenheit vorgesehen sein. Beispielsweise kann die Steuervorrichtung mit zunehmender Fahrgeschwindigkeit den Bewegungsdämpfer leichter dämpfend einstellen und/oder umgekehrt mit abnehmender Arbeitsgeschwindigkeit stärker dämpfend einstellen. Alternativ oder zusätzlich kann die Steuervorrichtung über zumindest eine Erfassungseinrichtung, beispielsweise in Form eines Bodenfeuchtesensors, der die Bodenfeuchte und/oder -weichheit messen kann, die Bodenbeschaffenheit bestimmen und mit zunehmend weicherem Boden den Bewegungsdämpfer stärker dämpfend einstellen und/oder umgekehrt bei zunehmend härterem Boden den Bewegungsdämpfer zunehmend weicher dämpfend einstellen.

Alternativ oder zusätzlich zu einer solchen Dämpferverstellung kann auch die vorgenannte Federeinrichtung verstellbar ausgebildet sein, um die Federkräfte, mit der die Nachbearbeitungseinheit beaufschlagt werden, stärker oder schwächer einstellen zu können. Eine solche Federverstellung kann grundsätzlich ebenfalls manuell bewerkstelligt werden, beispielsweise im Sinne einer Voreinstellung vor Beginn des Arbeitsbetriebs, ggf. aber auch während des Arbeitsbetriebs über entsprechende Stellmittel, um den Maschinenführer während des Arbeitsbetriebs die optimale Einstellung der Federstärke zu ermöglichen.

In Weiterbildung der Erfindung kann auch der Federeinrichtung eine Steuervorrichtung zur Einstellung der Federhärte bzw. Federkraft zugeordnet sein, wobei die Steuervorrichtung die Federeinstellung vorteilhafterweise in Abhängigkeit zumindest eines Betriebs- und/oder Bodenparameters vornehmen kann, insbesondere in Abhängigkeit der Fahrgeschwindigkeit und/oder der Bodenbeschaffenheit.

Grundsätzlich können die vorgenannten Steuervorrichtungen zur Einstellung der Dämpfercharakteristik des Bewegungsdämpfers und zur Einstellung der Federkraft der Federeinrichtung aber auch andere Betriebs- und/oder Bodenparameter berücksichtigen, beispielsweise die Einstellung der gewünschten Arbeitstiefe der Hauptbodenbearbeitungseinheit, die tatsächliche Bearbeitungstiefe der Hauptbodenbearbeitungseinheit, einen Anstellwinkel der Werkzeuge der Hauptbodenbearbeitungseinheit oder andere Maschineneinstellwerte, und/oder andere Bodenparameter wie beispielsweise die Welligkeit des zu bearbeitenden Geländes, die Bodenzusammensetzung beispielsweise in Form des Steinanteils, des Lehmanteils oder des Sandanteils, oder Bewuchsstärke und -typ, wobei derartige Bodenbeschaffenheitswerte über geeignete Erfassungseinrichtungen bzw. Sensoren bestimmt oder aus vorab gespeicherten Karten ausgelesen werden können.

In vorteilhafter Weiterbildung der Erfindung kann die Dämpfungscharakteristik des Bewegungsdämpfers und/oder die Federcharakteristik, -kennlinlie und/oder Kraft der Federeinrichtung auch in Abhängigkeit der tatsächlich auftretenden Vibrationen oder Schwingungen an der Maschine verändert werden, insbesondere derart, dass die genannten Dämpfer- und/oder Federkenngrößen so verändert werden, dass die auftretenden Schwingungen oder Vibrationen möglichst gering sind. Hierbei kann im Sinne einer rückkoppelnden Steuerung eine Erfassungseinrichtung die auftretenden Schwingungen und Vibrationen an der Maschine erfassen, wobei dann eine Steuervorrichtung die genannten Dämpfer- und/oder Federkenngrößen verstellt, dabei die erfassten Schwingungen und/oder Vibrationen beobachtet und die Dämpfer- und/oder Federkenngrößen auf den Einstellwert hält oder fährt, bei dem die Schwingungen am geringsten sind. Die Schwingungs-Erfassungseinrichtung kann hierbei beispielsweise Beschleunigungssensoren umfassen, welche Auf- und Abwärtsbewegungen der gesamten Maschine oder Vertikalbewegungen einzelner Maschinenkomponenten erfassen, oder Vibrationssensoren umfassen, welche höherfrequente Bauteilschwingungen bzw. -vibrationen an einzelnen Maschinenbauteilen wie beispielsweise am Maschinenrahmen erfassen.

Hinsichtlich der Arbeitswerkzeuge kann die Bodenbearbeitungsmaschine grundsätzlich verschieden ausgebildet sein. Insbesondere kann die Hauptbodenbearbeitungseinheit zumindest eine sich quer zur Fahrtrichtung erstreckende Scheibenreihe aufweisen, wobei ggf. mehrere solcher Scheibenreihen hintereinander angeordnet sein und die Hauptbodenbearbeitungseinheit bilden können. Alternativ zu einer solchen Ausbildung als Scheibenegge oder Scheibenkultivator kann die Hauptbodenbearbeitungseinheit aber auch eine Reihe von Bodenbearbeitungszinken aufweisen, insbesondere in Form von Grubberzinken. Gegebenenfalls können auch verschiedene Hauptbodenbearbeitungseinheiten miteinander kombiniert werden, beispielsweise in Form einer Scheibenreihe und einer Zinkenreihe.

Als Nachbearbeitungseinheit kann insbesondere eine Bodenwalze vorgesehen sein, wobei diese Bodenwalze grundsätzlich verschieden ausgebildet sein kann, beispielsweise in Form einer Stabwalze und/oder in Form einer Schneidringwalze und/oder in Form einer Packerradwalze und/oder in Form einer herkömmlichen Zylinderwalze.

Die Erfindung wird nachfolgend anhand einer bevorzugten Ausführungsform und zugehöriger Zeichnungen näher erläutert. In den Zeichnungen zeigen:
- Fig. 1:: eine perspektivische Rückansicht einer Bodenbearbeitungsmaschine in Form einer Scheibenegge nach einer Ausführungsform der Erfindung, welche als Hauptbodenbearbeitungseinheit zwei Scheibenreihen und als Nachbearbeitungseinheit eine Bodenwalze umfasst,
- Fig. 2:: eine schematische Seitenansicht der Bodenbearbeitungsmaschine aus Fig. 1, die die bewegliche Aufhängung der Nachbearbeitungseinheit und die für diese Beweglichkeit vorgesehene Federdämpfereinheit zeigt, und
- Fig. 3:: eine schematische Seitenansicht einer Bodenbearbeitungsmaschine ähnlich den Figuren 1 und 2, die nach einer weiteren Ausführung der Erfindung einer modifizierte Aufhängung für die Nachbearbeitungseinheit umfasst, welche ebenfalls höhenbeweglich und mit einer Federdämpfereinheit versehen ist.

Die in den Figuren gezeigte Bodenbearbeitungsmaschine ist als Scheibenegge ausgebildet und dabei zweireihig ausgeführt. Es versteht sich jedoch, dass auch mehr als zwei Reihen von Scheiben oder ggf. auch nur eine Scheibenreihe vorgesehen sein oder die Maschine auch mit anderen Bodenbearbeitungswerkzeugen versehen sein könnte.

Die Bodenbearbeitungsmaschine kann hierbei als Anbaugerät ausgebildet sein, welches zum Anbau an einen Schlepper bestimmt ist, beispielsweise mittels einer Dreipunktanlenkung, oder eine gezogene Bodenbearbeitungsmaschine bilden, welche beispielsweise in Form eines Aufsattelgeräts ausgebildet sein kann.

Ein Maschinenrahmen 1 ist mit einem Anbaubock 2 verbunden, durch den die Bodenbearbeitungsmaschine 10 beispielsweise über eine an sich übliche Dreipunktanlenkung an einen nicht gezeigten Schlepper oder dergleichen anbaubar ist. Der Maschinenrahmen 1 kann, wie in den Figuren gezeigt, als starrer, aus mehreren Quer- und Längsstreben zusammengesetzter Rahmen ausgebildet sein.

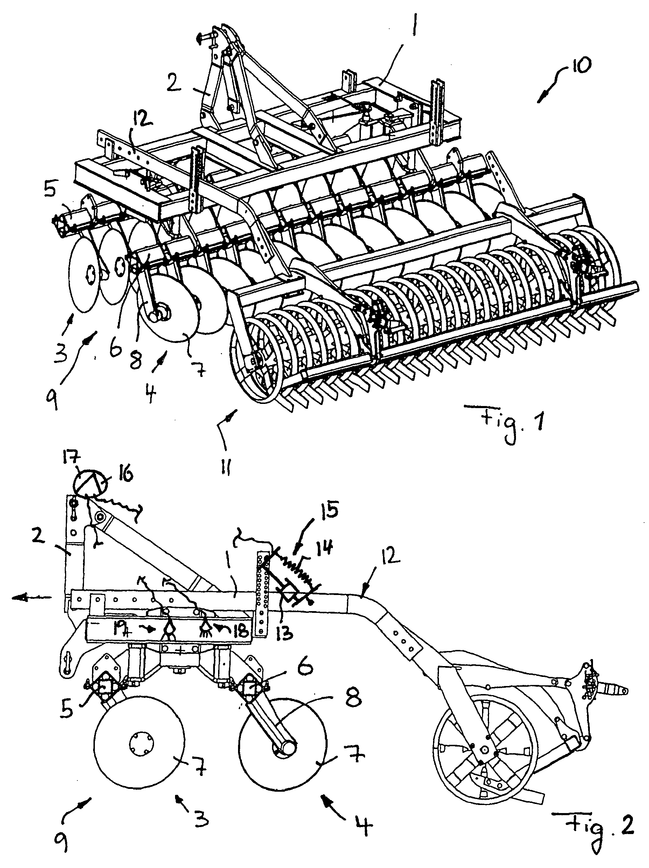

An dem genannten Maschinenrahmen 1 ist eine Hauptbodenbearbeitungseinheit 9 aufgehängt, die eine Vielzahl von Scheiben 7 zur Bodenbearbeitung aufweist, die in zwei, in Fahrtrichtung hintereinander angeordneten Scheibenreihen 3 und 4 quer zur Fahrtrichtung verteilt angeordnet sind. Die Scheiben können hierbei zur Fahrtrichtung betrachtet und/oder zur Vertikalen schräg angestellt sein, wobei die Schrägstellung in der vorderen Reihe entgegengesetzt zu der Schrägstellung in der hinteren Reihe sein kann. Wie Fig. 1 zeigt, können die Scheiben einzeln oder paarweise mittels Tragarmen 8 an Querträgern 5 gelagert sein, beispielsweise mittels elastischen Schwenklagern 6, wie dies per se an sich bekannt ist.

In Fahrtrichtung hinter der genannten Hauptbodenbearbeitungseinheit 9 ist eine Nachbearbeitungseinheit 11 vorgesehen, welche insbesondere als Bodenwalze ausgebildet sein kann, beispielsweise in Form einer Schneidringwalze, wie dies Fig. 1 zeigt.

Die genannte Nachbearbeitungseinheit 11 ist an einer Nachbearbeitungsträgereinheit 12 befestigt, welche am Maschinenrahmen 1 beweglich gelagert ist derart, dass die Nachbearbeitungseinheit 11 relativ zur Hauptbodenbearbeitungseinheit 9 höhenbeweglich ist. Wie Fig. 1 zeigt, kann die Nachbearbeitungsträgereinheit 12 um eine liegende Querachse schwenkbar am Maschinenrahmen 1 angelenkt sein, so dass die Nachbearbeitungseinheit 11 Höhenbewegungen relativ zur Hauptbodenbearbeitungseinheit ausführen kann.

Die Höhenbeweglichkeit der genannten Nachbearbeitungseinheit 11 ist dabei vorteilhafterweise auch im Arbeitsbetrieb gegeben, wobei die genannte Beweglichkeit der Nachbearbeitungsträgereinheit 12 relativ zum Maschinenrahmen 1 durch einen Bewegungsdämpfer 13 und eine Federeinrichtung 14 gesteuert bzw. beaufschlagt wird, die in vorteilhafter Weiterbildung der Erfindung in eine Federdämpfereinheit 15 integriert sein können. Während der genannte Bewegungsdämpfer 13 die Höhenbewegungen der Nachbearbeitungseinheit 11 relativ zum Maschinenrahmen 1 dämpft, versucht die genannte Federeinrichtung 14 die Nachbearbeitungseinheit 11 gegen den Boden nach unten zu drücken.

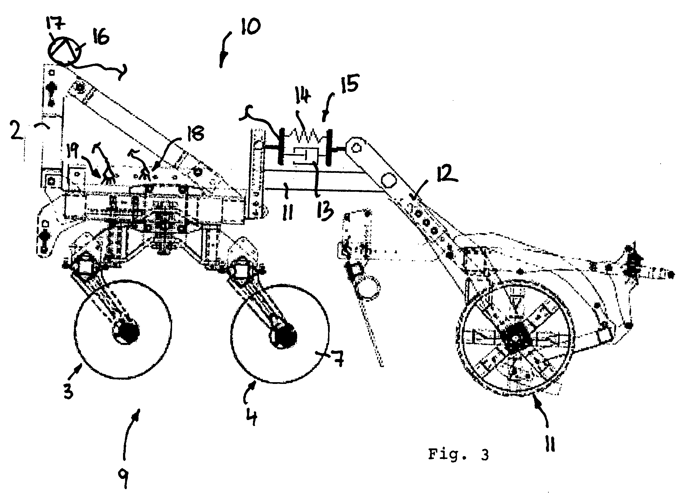

Wie Fig. 3 zeigt, kann die Aufhängung der Nachbearbeitungsträgereinheit 12 am Maschinenrahmen 1 und/oder die Anordnung des Bewegungsdämpfers 13 und/oder der Federeinrichtung 14 auch anders beschaffen sein, wobei auch gemäß der Ausführung nach Fig. 3 die Nachbearbeitungsträgereinheit 12 um eine liegende Querachse schwenkbar am Maschinenrahmen 1 gelagert ist, so dass die Nachbearbeitungseinheit 11 Höhenbewegungen gegenüber der Hauptbodenbearbeitungseinheit 9 ausführen kann.

Die Federdämpfereinheit 15 mit dem integrierten Bewegungsdämpfer 13 und der integrierten Federeinrichtung 14 ist auch hier von der genannten liegenden Schwenkachse beabstandet am Maschinenrahmen 1 und an der Nachbearbeitungsträgereinheit 12 angelenkt, um die genannten Schwenkbewegungen zu dämpfen bzw. mit Federkraft zu beaufschlagen.

Das genannte Federdämpfersystem 15 kann grundsätzlich verschieden ausgebildet sein, wobei beispielsweise die Federeinrichtung 14 und/oder der Bewegungsdämpfer 13 mechanisch, pneumatisch, hydraulisch oder elektromagnetisch oder in anderer physikalischer Funktionsweise ausgebildet sein kann.

Über eine Steuervorrichtung 16 kann der genannte Bewegungsdämpfer 13 in seiner Dämpfungscharakteristik eingestellt und über eine Steuervorrichtung 17 die Federeinrichtung 14 in ihrer Federkraft eingestellt werden, wobei die genannten Steuervorrichtungen 16 und 17 über geeignete Erfassungseinrichtungen 18 Betriebsparameter wie die Fahrgeschwindigkeit oder die Bearbeitungstiefe der Hauptbodenbearbeitungseinheit 9, oder Bodenparameter wie die Bodenfeuchte erfassen können, um in Abhängigkeit dieser Betriebs- und/oder Bodenparameter in der eingangs beschriebenen Weise die Dämpfungscharakteristik und Federkraft verändern zu können.

Weiterhin kann eine Schwingungs-Erfassungseinrichtung 19 vorgesehen sein, um das Schwingungsverhalten der Bodenbearbeitungsmaschine 10 zu erfassen, wobei hier beispielsweise mittels Beschleunigungssensoren Auf- und Abwärtsbewegungen der gesamten Maschine oder Vertikalbewegungen einzelner Maschinenkomponenten erfasst werden können, oder mittels Vibrationssensoren höherfrequente Bauteilschwingungen bzw. -vibrationen wie beispielsweise Vibrationen des Maschinenrahmens 1 erfasst werden können.

In Weiterbildung der Erfindung können die vorgenannten Steuervorrichtungen 16 und 17 in Abhängigkeit der erfassten Schwingungen und Vibrationen die Dämpfercharakteristik und/oder die Federeinstellung verändern, um die erfassten Schwingungen und/oder Vibrationen zu reduzieren.

## Patentansprüche

1. Landwirtschaftliche Bodenbearbeitungsmaschine zum Anbau an einen Schlepper, mit zumindest einer Hauptbodenbearbeitungseinheit (9), die an einem mit dem Schlepper verbindbaren Maschinenrahmen (1) aufgehängt ist, sowie einer Nachbearbeitungseinheit (11), die in Fahrtrichtung hinter der Hauptbodenbearbeitungseinheit (9) angeordnet und an einer Nachbearbeitungsträgereinheit (12) aufgehängt ist, die am Maschinenrahmen (1) höhenveränderlich gelagert ist, wobei die Nachbearbeitungsträgereinheit (12) im Arbeitsbetrieb am Maschinenrahmen (1) höhenveränderlich gehalten ist, wobei zwischen dem Maschinenrahmen (1) und der Nachbearbeitungsträgereinheit (12) eine Federeinrichtung (14) vorgesehen ist derart, dass die Nachbearbeitungseinheit (11) unter der Federbeaufschlagung im Arbeitsbetrieb relativ zum Maschinenrahmen (1) höhenbeweglich ist, **dadurch gekennzeichnet, dass** zwischen dem Maschinenrahmen (1) und der Nachbearbeitungsträgereinheit (12) zusätzlich zu der Federeinrichtung (14) ein Bewegungsdämpfer (13) zur Dämpfung der Höhenverstellbewegungen der Nachbearbeitungsträgereinheit (12) relativ zum Maschinenrahmen (1) vorgesehen ist, wobei der Bewegungsdämpfer (13) in seiner Dämpfungscharakteristik über Stellmittel im Arbeitsbetrieb einstellbar ausgebildet ist.

2. Landwirtschaftliche Bodenbearbeitungsmaschine nach dem vorhergehenden Anspruch, wobei eine Steuervorrichtung (16) zur automatischen variablen Steuerung der Dämpfungscharakteristik des Bewegungsdämpfers (13) in Abhängigkeit zumindest eines Betriebs- und/oder Bodenparameters, insbesondere Fahrgeschwindigkeit und/oder Bodenbeschaffenheit, vorgesehen ist.

3. Landwirtschaftliche Bodenbearbeitungsmaschine nach einem der vorhergehenden Ansprüche, wobei die Federeinrichtung (14) in ihrer Federcharakteristik und/oder ihrer Federkraft einstellbar ausgebildet ist.

4. Landwirtschaftliche Bodenbearbeitungsmaschine nach dem vorhergehenden Anspruch, wobei eine Steuervorrichtung (17) zur automatischen variablen Steuerung der Federcharakteristik und/oder Federkraft der Federeinrichtung (14) in Abhängigkeit zumindest eines Betriebs- und/oder Bodenparameters, insbesondere Fahrgeschwindigkeit und/oder Bodenbeschaffenheit, vorgesehen ist.

5. Landwirtschaftliche Bodenbearbeitungsmaschine nach einem der vorhergehenden Ansprüche, wobei eine Erfassungseinrichtung (19) zur Erfassung von Schwingungen und/oder Vibrationen der ganzen Bodenbearbeitungsmaschine (10) und/oder einzelner Bauelemente der Bodenbearbeitungsmaschine, insbesondere Schwingungen und/oder Vibrationen des Maschinenrahmens (1) vorgesehen ist, und eine Steuervorrichtung (16, 17) zur Steuerung der Dämpfungscharakteristik des Bewegungsdämpfers (13) und/oder der Federcharakteristik und/oder -kraft der Federeinrichtung (14) in Abhängigkeit der von der Erfassungseinrichtung (19) erfassten Schwingungen und/oder Vibrationen vorgesehen ist derart, dass die erfassten Schwingungen und/oder Vibrationen durch Veränderung der Dämpfungscharakteristik und/oder der Federcharakteristik und/oder -kraft reduziert werden.

## Claims

1. An agricultural soil cultivating machine for attachment to a tractor having at least one main soil cultivating unit (9) which is hitched to a machine frame (1) connectable to the tractor and having a post-cultivating unit (11) which is arranged behind the main soil cultivating unit (9) in the direction of travel and is hitched to a post-cultivating carrier unit (12) which is supported with height variability at the machine frame (1), wherein the post-cultivating carrier unit (12) is held with height variability at the machine frame (1) in working operation and wherein a spring device (14) is provided between the machine frame (1) and the post-cultivating carrier unit (12) such that the post-cultivating unit (11) is vertically movable relative to the machine frame (1) under the spring action in working operation,
**characterized in that**
a movement damper (13) for damping the vertical adjustment movements of the post-cultivating carrier unit (12) relative to the machine frame (1) is provided between the machine frame (1) and the post-cultivating carrier unit (12) in addition to the spring device (14), with the movement damper (13) being configured as adjustable in its damping characteristics in working operation via adjustment means.

2. An agricultural soil cultivating machine in accordance with the preceding claim, wherein a control apparatus (16) is provided for an automatic, variable control of the damping characteristics of the movement damper (13) in dependence on at least one operating parameter and/or soil parameter, in particular on the travel speed and/or soil properties.

3. An agricultural soil cultivating machine in accordance with one of the preceding claims, wherein the spring device (14) is configured as adjustable in its spring characteristics and/or in its spring force.

4. An agricultural soil cultivating machine in accordance with the preceding claim, wherein a control apparatus (17) is provided for the automatic, variable control of the spring characteristics and/or of the spring force of the spring device (14) in dependence on at least one operating parameter and/or soil parameter, in particular on the travel speed and/or soil properties.

5. An agricultural soil cultivating machine in accordance with one of the preceding claims, wherein a detection device (19) is provided for detecting oscillations and/or vibrations of the entire soil cultivating machine (10) and/or of individual components of the soil cultivating machine, in particular oscillations and/or vibrations of the machine frame (1), and wherein a control apparatus (16, 17) is provided for controlling the damping characteristics of the movement damper (13) and/or of the spring characteristics and/or of the spring force of the spring device (14) in dependence on the oscillations and/vibrations detected by the detection device (19) such that the detected oscillations and/or vibrations are reduced by varying the damping characteristics and/or the spring characteristics and/or the spring force.

## Revendications

1. Machine agricole de traitement du sol destinée à être ajoutée sur un tracteur, comprenant au moins une unité de traitement du sol principale (9), qui est accrochée à un bâti de machine (1) pouvant être relié au tracteur, ainsi qu'une unité de post-traitement (11) qui est disposée derrière l'unité de traitement du sol principale (9) dans le sens de la marche et qui est accrochée à une unité de support de post-traitement (12), qui est montée réglable en hauteur sur le bâti de machine (1), l'unité de support de post-traitement (12) étant maintenue réglable en hauteur sur le bâti de machine (1) en fonctionnement, un dispositif à ressort (14) étant prévu entre le bâti de machine (1) et l'unité de support de post-traitement (12) de telle manière qu'en fonctionnement, l'unité de post-traitement (11) est mobile en hauteur par rapport au bâti de machine (1) sous l'action du ressort,
**caractérisée en ce que**
un amortisseur de mouvement (13) destiné à amortir les mouvements de réglage en hauteur de l'unité de support de post-traitement (12) par rapport au bâti de machine est prévu entre le bâti de machine (1) et l'unité de support de post-traitement (12) en plus du dispositif à ressort (14), l'amortisseur de mouvement (13) étant réalisé réglable en fonctionnement en ce qui concerne sa caractéristique d'amortissement par le biais de moyens de réglage.

2. Machine agricole de traitement du sol selon la revendication précédente, dans laquelle un dispositif de commande (16) est prévu pour la commande variable automatique de la caractéristique d'amortissement de l'amortisseur de mouvement (13) en fonction d'au moins un paramètre de fonctionnement et/ou du sol, en particulier la vitesse de déplacement et/ou la nature du sol.

3. Machine agricole de traitement du sol selon l'une des revendications précédentes, dans laquelle le dispositif à ressort (14) est réalisé réglable en ce qui concerne sa caractéristique de ressort et/ou sa force de ressort.

4. Machine agricole de traitement du sol selon la revendication précédente, dans laquelle un dispositif de commande (17) est prévu pour la commande variable automatique de la caractéristique de ressort et/ou de la force de ressort du dispositif à ressort (14) en fonction d'au moins un paramètre de fonctionnement et/ou du sol, en particulier la vitesse de déplacement et/ou la nature du sol.

5. Machine agricole de traitement du sol selon l'une des revendications précédentes, dans laquelle un dispositif de détection (19) est prévu pour détecter des oscillations et/ou vibrations de toute la machine de traitement du sol (10) et/ou de composants individuels de la machine de traitement du sol, en particulier des oscillations et/ou vibrations du bâti de machine (1), et un dispositif de commande (16, 17) est prévu pour commander la caractéristique d'amortissement de l'amortisseur de mouvement (13) et/ou la caractéristique et/ou la force de ressort du dispositif à ressort (14) en fonction des oscillations et/ou vibrations détectées par le dispositif de détection (19) de telle manière que les oscillations et/ou vibrations détectées sont réduites par la modification de la caractéristique d'amortissement et/ou de la caractéristique et/ou la force de ressort.
